# EUROPÄISCHE PATENTSCHRIFT

(11) **EP 2 600 707 B1**
(45) Veröffentlichungstag und Bekanntmachung des Hinweises auf die Patenterteilung: **14.03.2018**
(21) Anmeldenummer: 11725120.7
(22) Anmeldetag: 16.06.2011
(51) Int. Cl.: A01B 79/00

(54) **VERFAHREN ZUR SIMULATION UND/ODER BESTIMMUNG EINER EFFEKTIVEN BEARBEITUNGSWEISE VON LANDWIRTSCHAFTLICHEN FLÄCHEN**
METHOD FOR SIMULATING AND/OR DETERMINING AN EFFECTIVE METHOD OF WORKING AGRICULTURAL AREAS
PROCÉDÉ POUR SIMULER ET/OU DÉTERMINER UNE MANIÈRE DE TRAVAILLER EFFICACEMENT DES SURFACES AGRICOLES

(30) Priorität: 06.08.2010 DE 102010033631
(43) Veröffentlichungstag der Anmeldung: 12.06.2013
(60) Teilanmeldung: 17191869.1
(73) Patentinhaber: Lacos Computerservice GmbH, 07937 Zeulenroda-Triebes (DE)
(72) Erfinder: DAMME, Bernd, 07937 Langenwolschendorf (DE); DAMME, Thomas, 07937 Zeulenroda-Triebes (DE)
(74) Vertreter: Kruspig, Volkmar
(86) Internationale Anmeldenummer: PCT/EP2011/060042
(87) Internationale Veröffentlichungsnummer: WO 2012/016752

(56) Entgegenhaltungen:
- EP-A1- 1 668 975
- EP-A1- 1 692 929
- EP-A2- 2 020 169
- WO-A2-2009/143399
- US-A1- 2009 240 430

## Beschreibung

Die Erfindung betrifft ein Verfahren zur Simulation und Bestimmung einer effektiven Bearbeitungsweise von landwirtschaftlichen Flächen, gemäß Patentanspruch 1.
Die Bearbeitungsstrategie bzw. die Bearbeitungsweise von landwirtschaftlichen Flächen ist sehr stark von der Gestaltung eines Geländes und von der Erfahrung des Fahrzeugführers einer landwirtschaftlichen Maschine abhängig. Unerfahrene Maschinenführer benötigen einige Zeit um eine effektive Bearbeitungsstrategie hinsichtlich des zeitlichen und materiellen Aufwandes für eine ausgewiesene landwirtschaftliche Fläche zu bestimmen. Oftmals geht dies mit wirtschaftlich oder technisch falsch bearbeiteten landwirtschaftlichen Flächen oder Schlägen einher. Ein Verfahren gemäss dem Oberbegriffs ist aus EP-A1-1 692 929 bekannt. Aus dem Vorgenannten ist es Aufgabe der vorliegenden Erfindung, ein Verfahren zur Simulation und Bestimmung einer effektiven Bearbeitungsweise von landwirtschaftlichen Flächen anzugeben.
Die Simulation ist von Vorteil, da verschiedene Bearbeitungsweisen und - strategien miteinander hinsichtlich des zeitlichen und finanziellen Aufwandes verglichen werden können und bereits im Vorfeld zur eigentlichen auszuführenden landwirtschaftlichen Tätigkeit, Aussagen über die später zu erzielende Ergebnisse bzw. Ernteerträge gemacht werden können.
Die Lösung der Aufgabe erfolgt mit Hilfe eines Verfahrens zur Simulation und Bestimmung einer effektiven Bearbeitungsweise von landwirtschaftlichen Flächen, gemäß Patentanspruch 1, wobei die Unteransprüche mindestens zweckmäßige Ausgestaltungen und Weiterbildungen darstellen.

Erfindungsgemäß ist das Verfahren zur Simulation und Bestimmung dadurch gekennzeichnet, dass die landwirtschaftliche Flächeneinteilung in Vorgewende und Hauptfläche simuliert und bestimmt wird. Zu bearbeitende zusammenhängende landwirtschaftliche Flächen werden auch als landwirtschaftliche Schläge oder bewirtschaftete Feldblöcke bezeichnet. Das erfindungsgemäße Verfahren bezieht sich auf die Bearbeitung der genannten landwirtschaftlichen Flächen, wobei ein Vorgewende den randlichen Bereich, also den Begrenzungsbereich eines Feldes beschreibt, auf dem bei der Bearbeitung mittels einer landwirtschaftlichen Maschine für gewöhnlich gewendet wird. Bei der üblicherweise ohne Simulation und vorheriger Bestimmung streifenförmigen Bearbeitung weist ein Feld also an zwei gegenüberliegenden Seiten je ein Vorgewende auf. Dies sind zumeist die beiden kürzeren Seiten, da die Längsbearbeitung insgesamt mit weniger Wendevorgängen verbunden und dadurch wirtschaftlicher ist. Bearbeitet werden Vorgewendeflächen erst im Anschluss an den Hauptteil des bewirtschafteten Feldblockes quer zur sonstigen Bearbeitungsrichtung und parallel zum Ackerrand.
Die Gestaltung von Fahrspuren landwirtschaftlicher Maschinen im Vorgewende und/oder in der Hauptfläche beschreibt die Wahl der Fahrspurrichtung, sowie den Kurvenverlauf oder die Wahl der Reihenfolge der nacheinander gewählten Fahrspuren.
Die Simulation und/oder die Bestimmung einer effektiven Bearbeitungsweise von landwirtschaftlichen Flächen erfolgt mittels einer Datenverarbeitungsanlage und erfolgt abhängig von möglichen Einfahrtspunkten in die landwirtschaftliche Fläche und/oder von den topographischen Gegebenheiten und/oder Hindernissen und/oder Ausschlussflächen und/oder von Pflanzenzuständen und/ oder von Bodenzuständen wie Feuchte, Nährstoffgehalt und Trockenmasse des Bodens und/oder dem Reifegrad von Pflanzen oder Früchten und/oder der Lagerung von Ernteprodukten auf dem Boden.
Die genannten Größen, abhängig derer die Simulation, Berechnung oder Bestimmung erfolgt, werden mittels Sensoren ermittelt und automatisch erfasst und abgespeichert, außerdem ist eine manuelle Eingabe in die Datenverarbeitungsanlage möglich sowie ein Zurückgreifen auf Informationen in Datenbanken denkbar. Die Informationen können beispielsweise saisonal also Jahreszeitabhängig gespeichert und wiedergegeben werden.
Als topographische Gegebenheiten werden beispielsweise der Höhenverlauf, das Vorhanden sein von Gräben und Löchern und die Höhenlage einer landwirtschaftlichen Fläche bezeichnet. Hindernisse sind beispielsweise Bäume, Einzäunungen, Furchen oder andere den direkten Ablauf einer Flächenbearbeitung unterbrechende Gegebenheiten.
Einige Pflanzen oder Früchte werden nicht direkt bei der Ernte eingeholt, sondern nach dem Mähen oder "Abschneiden" einige Zeit auf dem Feldboden gelagert.
Grundsätzlich ist festzustellen, dass das erfindungsgemäße Verfahren bei sämtlichen Bearbeitungsvorgängen von landwirtschaftlichen Flächen eingesetzt werden kann. Dabei handelt es sich beispielsweise um die Ackerbestellung bzw. Aussaat, dem Ausbringen von Dünge- oder Pflanzenschutzmittel und/oder die Ernte.
Einen aus zeitlicher und finanzieller Sicht optimalen Fahrweg einer landwirtschaftlichen Maschine zur Ausbringung von Pflanzenschutzmitteln und/oder Düngemitteln wird beispielsweise auf Grundlage von Sensordaten und/oder einer Applikationskarte simuliert und/oder bestimmt. So kann es beispielsweise der Fall sein, dass bestimmte Bodenabschnitte des zu bearbeitenden Feldes besser mit natürlich vorkommenden Nährstoffen versogt sind, als benachbarte oder umgebende Feldareale, sodass diese Bodenabschnitte nicht mit der gleichen Düngemenge zu versehen sind, wie vergleichbar "schlechtere" Bodenabschnitte. Diese Daten sind beispielsweise in einen Bordcomputer einer landwirtschaftlichen Maschine zu implementieren, sodass die Düngemengenausgabe Bodenarealabhängig gesteuert werden kann. Die Ausgaben für Düngemittel werden somit reduziert und gleichzeitig die landwirtschaftlichen Flächen vor Überdüngung geschützt.
Das erfindungsgemäße Verfahren sieht vor, einen optimalen Fahrweg einer landwirtschaftlichen Maschine zum Einholen der Ernte auf Grundlage der Erntemenge und/oder des Nährstoff- oder Wassergehaltes von Pflanzen oder Früchten zu simulieren und/oder zu bestimmen.
Des Weiteren ist es denkbar einen optimalen Fahrweg einer Erntemaschine und/oder den Einfahrweg einer Erntemaschine (Anschnittpunkt des Schlages) in eine landwirtschaftliche Fläche unter Berücksichtigung des Reifegrades und/oder der Lagerung eines Ernteprodukts zu simulieren, zu berechnen bzw. zu bestimmen.
Außerdem kann in die Simulation/Bestimmung der Aufwand für die Befüllung eines Ausbringbehälters und/oder die Entleerung eines Erntebunkers miteinbezogen werden. So kann bereits im Vorfeld einer Ernte berechnet werden, zu welchem Zeitpunkt der Erntebunker einer Maschine gefüllt sein wird und welcher kürzeste Weg der Maschine zum Entleeren des Bunkers in einem landwirtschaftlichen Gehöft gewählt werden soll bzw. zu welchem Zeitpunkt weitere landwirtschaftliche Fahrzeuge zum Erntebunker gefahren werden sollen, um eine Entleerung des Erntebunkers direkt am Feld zu realisieren.

Die Datenverarbeitungsvorrichtung zur Simulation und Bestimmung einer effektiven Bearbeitungsweise von landwirtschaftlichen Flächen, ist in einem Bordcomputer einer landwirtschaftlichen Maschine integriert, so dass das Verfahren mit Hilfe von GPS-Signalen in Echtzeit durchgeführt wird. Des Weiteren ist es denkbar die Datenverarbeitungsvorrichtung mit einem PC zu verbinden, welcher beispielsweise auf dem landwirtschaftlichen Anwesen installiert ist. Die simulierten, berechneten bzw. bestimmten Daten können mittels drahtloser oder anderweitiger Übertragung zu den landwirtschaftlichen Maschinen übertragen werden.

Des Weiteren ist es denkbar, die simulierten und/oder bestimmten Daten zur effektiven Bearbeitungsweise einer landwirtschaftlichen Fläche in Daten zur Steuerung des Fahrweges und/oder Steuerung zur Auslösung von automatischen oder angezeigten Schaltvorgängen von vollautomatischen oder manuell zu bedienenden landwirtschaftlichen Maschinen umzuwandeln.

## Patentansprüche

1. Verfahren zur Simulation und Bestimmung einer effektiven Bearbeitungsweise von landwirtschaftlichen Flächen, wobei
eine landwirtschaftliche Flächeneinteilung in Vorgewende und Hauptfläche simuliert und bestimmt wird,
**dadurch gekennzeichnet, dass**
die Simulation und Bestimmung abhängig von möglichen Einfahrtspunkten in die landwirtschaftliche Fläche und von topographischen Gegebenheiten, Hindernissen, Pflanzenzuständen, Bodenzuständen wie Feuchte, Nährstoffgehalt und Trockenmasse des Bodens und Reifegrad von Pflanzen, Früchten und Lagerung von Ernteprodukten auf dem Boden erfolgt,
wobei
die Größen in Abhängigkeit derer die Simulation und Bestimmung erfolgt, mittels Sensoren ermittelt, automatisch erfasst und abgespeichert werden,
wobei
eine Datenverarbeitungsvorrichtung zur Simulation und Bestimmung der effektiven Bearbeitungsweise der landwirtschaftlichen Flächen in einem Bordcomputer einer landwirtschaftlichen Maschine integriert und das Verfahren mit Hilfe von GPS-Signalen in Echtzeit durchführbar ist.

2. Verfahren nach Anspruch 1,
**dadurch gekennzeichnet, dass**
es sich bei der Bearbeitung von landwirtschaftlichen Flächen um Ackerbestellung und/oder Aussaat und/oder Düngung und/oder Ausbringen von Pflanzenschutzmitteln und/oder Ernte handelt.

3. Verfahren nach einem der Ansprüche 1 oder 2,
**dadurch gekennzeichnet, dass**
ein optimaler Fahrweg der landwirtschaftlichen Maschine zur Ausbringung von Pflanzenschutzmittel und/oder Dünger auf Grundlage der Sensordaten und einer Applikationskarte simuliert und bestimmt wird.

4. Verfahren nach einem der vorangegangenen Ansprüche,
**dadurch gekennzeichnet, dass**
ein optimaler Fahrweg der landwirtschaftlichen Maschine zum Einholen der Ernte auf Grundlage der Erntemenge und/oder des Nährstoff- oder Wassergehaltes von Pflanzen oder Früchten simuliert und bestimmt wird.

5. Verfahren nach einem der vorangegangenen Ansprüche,
**dadurch gekennzeichnet, dass**
ein optimaler Fahrweg einer Erntemaschine und/oder der Einfahrweg einer Erntemaschine in die landwirtschaftliche Fläche unter Berücksichtigung des Reifegrades und/oder der Lagerung eines Ernteproduktes simuliert und bestimmt wird.

6. Verfahren nach einem der vorangegangenen Ansprüche,
**dadurch gekennzeichnet, dass**
der Aufwand für die Befüllung eines Ausbringbehälters und/oder die Entleerung eines Erntebunkers in die Simulation und Bestimmung einbezogen werden.

7. Verfahren nach einem der vorangegangenen Ansprüche,
**dadurch gekennzeichnet, dass**
die bestimmten und simulierten Daten zur effektiven Bearbeitungsweise der landwirtschaftlichen Fläche in Daten zur Steuerung des Fahrweges und/oder Steuerung zur Auslösung von automatischen oder angezeigten Schaltvorgängen von vollautomatischen oder manuell zu bedienenden landwirtschaftlichen Maschinen umgewandelt werden.

## Claims

1. A method for stimulating and/or determining an effective method for working agricultural surfaces, wherein an agricultural surface distribution in an edge surface and in a main surface is simulated and determined,
**characterized in that** the simulation and determination is performed as a function of optional vehicle access points to the agricultural surface, topographic conditions, obstacles, plant conditions, ground conditions like humidity, nutrient content and dry mass of the ground and maturation level of plants and fruits and storage of harvest products on the ground,
wherein variables influencing the simulation and the determination are determined by sensors and detected and stored automatically,
wherein a data processing device for simulating and determining an effective method for working the agricultural surfaces is integrated in an onboard computer of an agricultural machine and the method is executable in real time based on GPS signals.

2. The method according to claim 1,
**characterized in that**
working the agricultural surfaces includes cultivating the soil and/or sowing and/or fertilizing and/or dispensing plant protection products and/or harvesting.

3. The method according to one of the claims 1 or 2,
**characterized in that**
an optimum travel path of the agricultural machine for dispensing the plant protection products and/or fertilizer is simulated and determined based on the sensor data and an application chart.

4. The method according to one of the preceding claims,
**characterized in that**
an optimum travel path of the agricultural machine is simulated and determined for collecting a harvest based on a harvest volume and/or a nutrient content or water content of plants or fruit.

5. The method according to one of the preceding claims,
**characterized in that**
an optimum drive path of a harvest machine and/or an access path of the harvest machine into the agricultural surface is simulated and determined as a function of a degree of maturation and/or a storage of a harvest product.

6. The method according to one of the preceding claims,
**characterized in that**
time for filling a dispensing container and/or emptying a harvest bunker are included into the simulation and the determination.

7. The method according to one of the preceding claims,
**characterized in that**
the determined and simulated data for effectively working the agricultural surface is converted into data for controlling the drive path and/or controlling automatic or displayed shifting processes of fully automatic or manually operable agricultural machines.

## Revendications

1. Procédé pour la simulation et la détermination d'une procédure de travail efficace de surfaces agricoles, dans lequel
on simule et on détermine une subdivision agricole des surfaces en tournières et en surfaces principales,
**caractérisé en ce que**
la simulation et la détermination ont lieu en fonction des points d'accès possibles dans la surface agricole et des données topographiques, des obstacles, des états des plantations, des états du sol, comme humidité, teneur en substances nutritives et masse sèche du sol ainsi que du degré de maturité des plantes, des fruits, et du stockage des produits récoltés sur le sol,
dans lequel
les grandeurs en fonction desquelles la simulation et la détermination ont lieu sont déterminées au moyen de capteurs, sont saisies de façon automatique et sont mémorisées,
dans lequel
un dispositif de traitement de données destiné à la simulation et à la détermination de la méthode de travail efficace des surfaces agricoles est intégré dans un ordinateur de bord d'une machine agricole et le procédé est susceptible d'être mis en oeuvre en temps réel avec l'aide de signaux GPS.

2. Procédé selon la revendication 1,
**caractérisé en ce que** le travail des surfaces agricoles est la mise en culture, et/ou l'ensemencement et/ou l'épandage d'engrais et/ou de produits phytosanitaires et/ou la récolte.

3. Procédé selon l'une des revendications 1 ou 2,
**caractérisé en ce que** l'on simule et l'on détermine un trajet de déplacement optimal de la machine agricole pour l'épandage de produits phytosanitaires et/ou d'engrais sur la base des données de capteurs et d'une carte d'application.

4. Procédé selon l'une des revendications précédentes,
**caractérisé en ce que** l'on simule et on détermine un trajet de déplacement optimal de la machine agricole pour la récolte sur la base de la quantité à récolter et/ou de la teneur nutritive ou de la teneur en eau des plantes ou des fruits.

5. Procédé selon l'une des revendications précédentes,
**caractérisé en ce que** l'on simule et on détermine un trajet de déplacement optimal d'une machine de récolte et/ou le trajet d'accès d'une machine de récolte dans la surface agricole en tenant compte du degré de maturité et/ou du stockage d'un produit récolté.

6. Procédé selon l'une des revendications précédentes,
**caractérisé en ce que** le travail et les dépens pour le remplissage d'un réservoir d'épandage et/ou la vidange d'un silo de récolte sont intégrés dans la simulation et la détermination.

7. Procédé selon l'une des revendications précédentes,
**caractérisé en ce que** les données déterminées et simulées, en vue d'une procédure de travail efficace des surfaces agricoles, sont converties en données pour la commande du trajet de déplacement et/ou la commande pour le déclenchement d'opérations de commutation automatiques ou affichées de machines agricoles entièrement automatiques ou à commander manuellement.
